# EUROPÄISCHE PATENTSCHRIFT

(11) **EP 3 263 392 B1**
(45) Veröffentlichungstag und Bekanntmachung des Hinweises auf die Patenterteilung: **26.12.2018**
(21) Anmeldenummer: 16177354.4
(22) Anmeldetag: 30.06.2016
(51) Int. Cl.: B60N 2/02, B60N 2/90, B60R 11/02, B60K 37/06

(54) **VERFAHREN UND VORRICHTUNG ZUM VERSTELLEN ZUMINDEST EINES BEWEGBAREN ERSTEN SITZELEMENTS EINES FAHRZEUGSITZES**
METHOD AND DEVICE FOR ADJUSTING OF AT LEAST ONE MOVABLE FIRST SEAT ELEMENT OF A VEHICLE SEAT
PROCEDE ET DISPOSITIF DE REGLAGE D'AU MOINS UN PREMIER ELEMENT DE SIEGE MOBILE D'UN SIEGE DE VEHICULE

(43) Veröffentlichungstag der Anmeldung: 03.01.2018
(73) Patentinhaber: Volkswagen Aktiengesellschaft, 38440 Wolfsburg (DE)
(72) Erfinder: Cengil, Sükrü, 30938 Burgwedel (DE); Schnurr, Andrea, 38368 Mariental (DE); Belun, Marina, 30625 Hannover (DE); Herdey, Jan Peter, 38110 Braunschweig (DE); Wolf, Oliver, 38442 Wolfsburg (DE)

(56) Entgegenhaltungen:
- EP-A2- 2 163 420
- DE-A1- 4 132 499
- DE-U1-202005 009 934
- US-A1- 2009 210 110
- US-B1- 8 596 716

## Beschreibung

Die vorliegende Erfindung betrifft ein Verfahren zum Verstellen zumindest eines bewegbaren ersten Sitzelements eines Fahrzeugsitzes. Des Weiteren betrifft die Erfindung eine Vorrichtung zum Verstellen zumindest eines bewegbaren ersten Sitzelements eines Fahrzeugsitzes mit einer ersten Verstelleinrichtung zum Bewegen des ersten Sitzelements und einer Anzeigevorrichtung mit einer Anzeigefläche zur Anzeige eines Graphikelements des zu verstellenden Fahrzeugsitzes das zumindest ein Graphikelement des ersten Sitzelements umfasst. Dabei sind zum Verstellen des ersten Sitzelements auf der Anzeigefläche ein erstes und ein zweites Schaltelement anzeigbar, wobei das erste Schaltelement ein erstes und das zweite Schaltelement ein zweites graphisches Pfeilelement umfassen, welche entgegengesetzte Richtungen zum Bewegen des Sitzelements auszeichnen.

In modernen Fahrzeugen, insbesondere in Kraftfahrzeugen, ist eine Vielzahl von Einrichtungen vorgesehen, die elektronisch bedient werden können. Vielfach erfolgt daher die Bedienung nicht mehr über mechanische Bedienelemente, sondern über eine Benutzerschnittstelle, die eine Anzeigefläche und eine zugeordnete Eingabeeinrichtung, wie z. B. eine berührungsempfindliche Oberfläche, umfasst. Da bei derartigen Bediensystemen nicht mehr der unmittelbare Bezug zwischen einem Bedienelement und der zu bedienenden Vorrichtung besteht, ergibt sich die Herausforderung, dass das Bedienkonzept und die in Verbindung mit der Bedienung angezeigte Information für den Nutzer einfach, intuitiv und schnell verständlich sein sollte.

Die Sitzelemente des Fahrzeugsitzes wurden ursprünglich über mechanische Bedienelemente verstellt, die direkt mit den zu verstellenden Sitzelementen gekoppelt waren. Um dem Nutzer einen höheren Komfort zu bieten, werden auch elektrische Sitzelement-Verstelleinrichtungen eingesetzt. In diesem Fall sind elektrische Bedienelemente am Fahrzeugsitz angeordnet, bei deren Betätigung Steuersignale an Stellmotoren übertragen werden, welche die Sitzelemente elektrisch verstellen. Derartige elektrische Sitzelement-Verstelleinrichtungen sind jedoch nicht in ein allgemeines Bedienkonzept, welches eine zentrale Anzeigevorrichtung mit einer berührungsempfindlichen Oberfläche nutzt, integriert. Nachteilig an solchen Sitzelement-Verstelleinrichtungen ist der erhöhte Bauraumbedarf im Innenraum des Fahrzeugs und die höheren Kosten, die damit verbunden sind, dass separate elektrische Bedienelemente am Fahrzeugsitz angeordnet werden müssen.

Ein Verfahren und eine Vorrichtung nach dem Oberbegriff der unabhängigen Ansprüche ist in der EP 2 163 420 A2 beschrieben.

Der vorliegenden Erfindung liegt daher die Aufgabe zugrunde, ein Verfahren und eine Vorrichtung der eingangs genannten Art bereitzustellen, die sich in ein Bedienkonzept integrieren lassen, welches sich auf die Informationsanzeige auf einer Anzeigefläche stützt, und bei welchen die Verständlichkeit der Informationsanzeige verbessert ist.

Erfindungsgemäß wird diese Aufgabe durch ein Verfahren mit den Merkmalen des Anspruchs 1 und eine Vorrichtung mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird somit auf einer Anzeigefläche ein Graphikelement des zu verstellenden Fahrzeugsitzes mit zumindest einem Grafikelement des ersten Sitzelements angezeigt. Zum Verstellen des ersten Sitzelements werden ein erstes und ein zweites Schaltelement auf der Anzeigefläche angezeigt, wobei das erste Schaltelement ein erstes und das zweite Schaltelement ein zweites graphisches Pfeilelement umfassen, welche entgegengesetzte Richtungen zum Bewegen des ersten Sitzelements auszeichnen. Beim Betätigen des ersten Schaltelements wird ein Steuersignal erzeugt, durch welches das erste Sitzelement in einer ersten Richtung bewegt wird und gleichzeitig wird das Graphikelement des ersten Sitzelements bewegt.

Bei dem erfindungsgemäßen Verfahren wird als Eingabeeinrichtung vorteilhafterweise eine Anzeigefläche mit einer berührungsempfindlichen Oberfläche, d. h. ein sogenannte Touchscreen, verwendet. Auf diese Weise lässt sich die Bedienung zum Verstellen des ersten Sitzelements in ein allgemeines Bedienkonzept, welches die Anzeigefläche mit der berührungsempfindlichen Oberfläche nutzt, integrieren. Vorteilhafterweise sind somit keine weiteren mechanischen oder elektrischen Bedienelemente erforderlich. Auf diese Weise lässt sich das erfindungsgemäße Verfahren sehr kostengünstig umsetzen. Außerdem kann Bauraum im Innenraum des Fahrzeugs durch den Einsatz des erfindungsgemäßen Verfahrens gespart werden.
Des Weiteren erhält der Nutzer beim Verstellen des ersten Sitzelementes nicht nur ein direktes Feedback durch den Sitz, welcher sich beim Betätigen des ersten Schaltelements bewegt, sondern auch ein visuelles Feedback auf der Anzeigefläche, da sich gleichzeitig das Graphikelement des ersten Sitzelements bewegt. Auf diese Weise wird ein sehr einfach erlernbares und intuitiv bedienbares Verfahren zum Verstellen des ersten Sitzelements bereitgestellt.
Analog der Funktion des ersten Schaltelements wird bevorzugt beim Betätigen des zweiten Schaltelements ein Steuersignal erzeugt, durch welches das erste Sitzelement in einer zur ersten Richtung entgegengesetzten Richtung bewegt wird. Auch in diesem Fall wird gleichzeitig das Graphikelement des ersten Sitzelements bewegt.
Beispielsweise wird beim Betätigen des ersten bzw. des zweiten Schaltelements das Graphikelement des ersten Sitzelements hin und her bewegt und nach Beendigung der Betätigung des ersten bzw. zweiten Schaltelements kehrt das Graphikelement des ersten Sitzelements in einen Ausgangszustand zurück.
Eine Betätigung bedeutet in diesem Fall insbesondere, dass ein Betätigungsobjekt die berührungsempfindliche Oberfläche bei dem Schaltelement berührt. Die Betätigung wird dann beendet, wenn das Betätigungsobjekt das Schaltelement nicht mehr berührt. Die Hin- und Her-Bewegung des Graphikelements für das Sitzelement veranschaulicht in diesem Fall die Freiheitsgrade der Bewegung für dieses Sitzelement. Hierdurch werden dem Nutzer vorteilhafterweise die Bewegungsmöglichkeiten des Sitzelements veranschaulicht.
Bei dem Betätigungsobjekt, welches bei dem erfindungsgemäßen Verfahren verwendet wird, kann es sich beispielsweise um die Fingerspitze eines Nutzers, einen Betätigungsstift oder irgendein anderes Objekt handeln.

Erfindungsgemäß wird beim Betätigen des ersten bzw. des zweiten Schaltelements das Graphikelement des ersten Sitzelements in einer der ersten Richtung entsprechenden Richtung bewegt bzw. in einer der entgegengesetzten Richtung entsprechenden Richtung bewegt. Die Bewegungsrichtung eines Graphikelements bezieht sich in diesem Fall auf die Richtung, die der Nutzer durch die Darstellung des Fahrzeugsitzes mittels des Graphikelements wahrnimmt. Die tatsächlichen Bewegungen des Sitzelements werden somit zumindest hinsichtlich der Richtung direkt in Bewegungen in der Darstellung der Graphikelemente für das Sitzelement umgesetzt.

Gemäß dem erfindungsgemäßen Verfahren weist der zu verstellende Fahrzeugsitz ferner ein Sitzelementpaar auf, das ein zweites und ein drittes Sitzelement umfasst, die aufeinander zu und voneinander weg bewegbar sind. In diesem Fall werden bei dem Graphikelement des zu verstellenden Fahrzeugsitzes auf der Anzeigefläche Graphikelemente für das zweite und dritte Sitzelement angezeigt. Zum Verstellen des Sitzelementpaars werden auf der Anzeigefläche ein drittes Schaltelement, das ein drittes und ein viertes graphisches Pfeilelement umfasst, welche voneinander weg weisen, und ein viertes Schaltelement, das ein fünftes und ein sechstes Pfeilelement umfasst, welche aufeinander zu weisen, angezeigt. Beim Betätigen des dritten Schaltelements wird in diesem Fall ein Steuersignal erzeugt, durch welches das zweite und das dritte Sitzelement des Sitzelementpaars voneinander weg bewegt werden und gleichzeitig die Graphikelemente des zweiten und des dritten Sitzelements bewegt werden. Beim Betätigen des vierten Schaltelements wird ein Steuersignal erzeugt, durch welches das zweite und das dritte Sitzelement des Sitzelementpaars aufeinander zu bewegt werden und gleichzeitig die Graphikelemente des zweiten und des dritten Sitzelements bewegt werden. Vorteilhafterweise können hierdurch auch aufeinander zu und voneinander weg bewegbare Sitzelemente verstellt werden, wobei auch deren Verstellung in das Bedienkonzept integriert werden kann, welches auf der Informationsanzeige der Anzeigefläche beruht.

Beim Betätigen des dritten Schaltelements werden insbesondere die Graphikelemente des zweiten und des dritten Sitzelements voneinander weg bewegt und beim Betätigen des vierten Schaltelements werden insbesondere die Graphikelemente des zweiten und des dritten Sitzelements aufeinander zu bewegt. Auf diese Weise kann eine direkte Umsetzung der tatsächlichen Bewegung der Sitzelemente erreicht werden, so dass die Darstellung auf der Anzeigefläche für den Nutzer sehr intuitiv verständlich ist und das durch den Fahrzeugsitz vermittelte Feedback mit dem visuellen Feedback über die Anzeigefläche übereinstimmt.

Des Weiteren ist es möglich, dass bei ein Betätigen des dritten bzw. vierten Schaltelements die Graphikelemente des zweiten und des dritten Sitzelements aufeinander zu und voneinander weg hin und her bewegt werden und nach Beendigung der Betätigung des dritten bzw. vierten Schaltelements die Graphikelemente des zweiten und des dritten Sitzelements in einen Ausgangszustand zurückkehren. Hierdurch werden dem Nutzer vorteilhafterweise die Bewegungsmöglichkeiten der Sitzelemente des Sitzelementpaars veranschaulicht.

Gemäß einer weiteren Ausgestaltung des erfindungsgemäßen Verfahrens weist der Fahrzeugsitz ein weiteres Sitzelementpaar auf, das ein viertes und ein fünftes Sitzelement umfasst, die aufeinander zu und voneinander weg bewegbar sind. Bei dem Graphikelement des zu verstellenden Fahrzeugsitzes werden auf der Anzeigefläche Graphikelemente für das vierte und fünfte Sitzelement angezeigt. Zum Verstellen des weiteren Sitzelementpaars werden auf der Anzeigefläche ein fünftes Schaltelement, das ein siebtes und ein achtes graphisches Pfeilelement umfasst, welche voneinander weg weisen, und ein sechstes Schaltelement, das ein neuntes und ein zehntes Pfeilelement umfasst, welche aufeinander zu weisen, angezeigt. Beim Betätigen des fünften Schaltelements wird ein Steuersignal erzeugt, durch welches das vierte und das fünfte Sitzelement des weiteren Sitzelementpaars bewegt werden und gleichzeitig die Graphikelemente des vierten und des fünften Sitzelements voneinander weg bewegt werden. Beim Betätigen des sechsten Schaltelements wird ein Steuersignal erzeugt, durch welches das vierte und das fünfte Sitzelement des weiteren Sitzelementpaars aufeinander zu bewegt werden und gleichzeitig die Graphikelemente des vierten und des fünften Sitzelements bewegt werden. Die Darstellung der Graphikelemente für das weitere Sitzelementpaar erfolgt insbesondere auf dieselbe Weise wie die Darstellung der Graphikelemente für das Sitzelementpaar. Auf diese Weise können aufeinander zu und voneinander weg bewegbare Sitzelemente eines Fahrzeugsitzes durch das erfindungsgemäße Verfahren vorteilhafterweise vollständig verstellt werden.

Gemäß einer Ausgestaltung des erfindungsgemäßen Verfahrens entspricht die Bewegung der Graphikelemente für eines der Sitzelemente oder für die Sitzelemente der Bewegung des jeweiligen Sitzelements oder der jeweiligen Sitzelemente. Insbesondere werden die realen Bewegungen der Sitzelemente des Fahrzeugsitzes synchron auf der Anzeigefläche durch die Bewegungen der entsprechenden Graphikelemente dieser Sitzelemente wiedergegeben. Hierfür werden insbesondere von den Verstelleinrichtungen für die Sitzelemente Bestätigungssignale zurück zu einer Steuereinrichtung übertragen, so dass diese die Bewegung der Graphikelemente für die Sitzelemente synchron zu der tatsächlichen Bewegung der Sitzelemente erzeugen kann.

Durch die Hin- und Her-Bewegung des ersten Sitzelements wird insbesondere die Sitztiefe des Fahrzeugsitzes verändert. Das zweite und das dritte Sitzelement des Sitzelementpaars sind insbesondere Sitzflächenseitenwangen. Das vierte und das fünfte Sitzelement des weiteren Sitzelementpaars sind insbesondere Rückenflächenseitenwangen.

Das Graphikelement des Fahrzeugsitzes ist insbesondere eine perspektivische Darstellung des Fahrzeugsitzes. Die graphischen Pfeildarstellungen erfolgen insbesondere als perspektivisch dargestellte Pfeilflächen. Diese Pfeilflächen der graphischen Pfeildarstellungen sind insbesondere parallel zu den zu den Sitzelementen gehörigen Ebenen ausgerichtet. Dabei gehört zu den Sitzflächenseitenwangen die Ebene der Sitzfläche des Fahrzeugsitzes und zu den Rückenflächenseitenwangen die Ebene der Rückenfläche des Fahrzeugsitzes. Des Weiteren sind insbesondere das erste und das zweite Pfeilelement in Fluchtrichtung des Graphikelements der Sitzfläche dargestellt. Entsprechend sind auch die weiteren Pfeilelemente in Fluchtrichtung zu der Sitzfläche bzw. der Rückenfläche des Graphikelements für den Fahrzeugsitz dargestellt.

Gemäß einer Ausgestaltung des erfindungsgemäßen Verfahrens sind die Graphikelemente der Sitzelemente als Schaltelemente ausgebildet. Durch eine Betätigung eines dieser Schaltelemente wird das jeweilige Sitzelement oder das jeweilige Sitzelementpaar ausgewählt. Der Nutzer kann somit nicht nur verschiedene Sitzelemente des Fahrzeugsitzes mittels der Darstellung auf der Anzeigefläche verstellen, sondern auch die zu verstellenden Sitzelemente mittels der Anzeigefläche auswählen.

Unter einem *Schaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen, darin, dass sie auswählbar sind. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden. Des Weiteren kann vorgesehen sein, dass ein Schaltelement markiert werden kann. In diesem Fall wird die zugeordnete Funktion noch nicht ausgeführt. Das markierte Schaltelement wird jedoch gegenüber anderen Schaltelementen hervorgehoben dargestellt. Erst bei einer Auswahl des Schaltelements wird die ihr zugeordnete Funktion ausgeführt.

Gemäß einer weiteren Ausgestaltung des erfindungsgemäßen Verfahrens wird eine Animation auf der Anzeigefläche wiedergegeben, wenn ein Übergang von einer Auswahl des ersten Sitzelements zu einer Auswahl eines anderen Sitzelements, insbesondere des Sitzelementpaars mit dem zweiten und dritten Sitzelement, erfolgt. Bei der Animation geht das erste graphische Pfeilelement zunächst in einen Doppelpfeil über, der sich dann in das dritte und vierte graphische Pfeilelement teilt. Das zweite graphische Pfeilelement geht zunächst in einen Balken über, der sich dann in das dritte und vierte graphische Pfeilelement teilt. Auf diese Weise wird erreicht, dass der Nutzer die Veränderung der Auswahl des Sitzelements durch die Graphikelemente sehr einfach und intuitiv erkennen kann.

Gemäß einer weiteren Ausgestaltung des erfindungsgemäßen Verfahrens werden ein ausgewähltes Sitzelement oder ausgewählte Sitzelemente in dem Graphikelement des Fahrzeugsitzes durch eine Flächenfüllung hervorgehoben dargestellt. Bei der Animation verschwindet dann die Flächenfüllung zur Hervorhebung des Graphikelements des ersten Sitzelements und die Flächenfüllung zur Hervorhebung des Graphikelements des anderen Sitzelements, insbesondere der Graphikelemente des Sitzelementpaars, erscheint, wobei das Verschwinden und das Erscheinen der Flächenfüllung wie ein Fluss eines Fluids von dem Graphikelement des ersten Sitzelements zu dem Graphikelement des anderen Sitzelements, d. h. insbesondere den Graphikelementen des Sitzelementpaars, dargestellt wird. Die Animation erfolgt insbesondere so, wie ein reales transluzentes gelartiges Fluid von dem einen Sitzelement in das oder die anderen Sitzelemente fließt. Die Hervorhebungen werden somit insbesondere nicht nur eingeblendet bzw. ausgeblendet, sondern durch den in den Graphikelementen dargestellten Fluss wird der Übergang der Auswahl zu anderen Sitzelementen intuitiv erkennbar veranschaulicht.

Gemäß einer weiteren Ausgestaltung des erfindungsgemäßen Verfahrens wird eine Annäherung eines Betätigungsobjekts an eine berührungsempfindliche Oberfläche einer Eingabeeinrichtung erfasst und, wenn die Annäherung des Betätigungsobjekts an die berührungsempfindliche Oberfläche erfasst wurde, werden betätigbare Schaltelemente hervorgehoben dargestellt. Die Schaltelemente können insbesondere dadurch hervorgehoben dargestellt werden, dass Umrisslinien zu den entsprechenden Schaltelementen dargestellt werden. Des Weiteren können die Schaltelemente in einer anderen Helligkeit oder einem anderen Kontrast dargestellt werden. Der Nutzer kann auf diese Weise nur durch die Annäherung eines Betätigungsobjekts, wie beispielsweise seiner Fingerspitze, an die berührungsempfindliche Oberfläche erfahren, welche Sitzelemente mittels der berührungsempfindlichen Oberfläche verstellt werden können.

Die erfindungsgemäße Vorrichtung ist durch eine Steuereinrichtung gekennzeichnet, die mit der ersten Verstelleinrichtung und der Anzeigevorrichtung datentechnisch gekoppelt ist und die ausgebildet ist, beim Betätigen des ersten Schaltelements ein Steuersignal zu erzeugen, durch welches das erste Sitzelement in einer ersten Richtung bewegt wird und gleichzeitig das Graphikelement des ersten Sitzelements bewegt wird. Ferner weist der zu verstellende Fahrzeugsitz ein Sitzelementpaar auf, das ein zweites und ein drittes Sitzelement umfasst, die aufeinander zu und voneinander weg bewegbar sind. Bei dem Graphikelement des zu verstellenden Fahrzeugsitzes sind auf der Anzeigefläche Graphikelemente für das zweite und dritte Sitzelement anzeigbar. Zum Verstellen des Sitzelementpaars sind auf der Anzeigefläche ein drittes Schaltelement, das ein drittes und ein viertes graphisches Pfeilelement umfasst, welche voneinander weg weisen, und ein viertes Schaltelement, das ein fünftes und ein sechstes Pfeilelement umfasst, welche aufeinander zu weisen, anzeigbar. Die Steuereinrichtung ist ausgebildet, beim Betätigen des dritten Schaltelements ein Steuersignal zu erzeugen, durch welches das zweite und das dritte Sitzelement des Sitzelementpaars voneinander weg bewegt werden und gleichzeitig die Graphikelemente des zweiten und des dritten Sitzelements bewegt werden, und beim Betätigen des vierten Schaltelements ein Steuersignal zu erzeugen, durch welches das zweite und das dritte Sitzelement des Sitzelementpaars aufeinander zu bewegt werden und gleichzeitig die Graphikelemente des zweiten und des dritten Sitzelements bewegt werden.

Die erfindungsgemäße Vorrichtung ist insbesondere so ausgebildet, dass sie die vorstehend genannten Verfahrensschritte teilweise oder vollständig ausführen kann. Sie weist daher dieselben Vorteile wie das erfindungsgemäße Verfahren auf.

Die Steuervorrichtung der erfindungsgemäßen Vorrichtung ist insbesondere auch ausgebildet, die Bewegungen weiterer Sitzelemente, wie es vorstehend mit Bezug auf das erfindungsgemäße Verfahren beschrieben wurde, zu steuern und gleichzeitig entsprechende Anzeigen auf der Anzeigefläche der Anzeigevorrichtung zu erzeugen, wie es auch mit Bezug auf das erfindungsgemäße Verfahren erläutert wurde.

Bei der erfindungsgemäßen Vorrichtung verändert die Hin- und Her-Bewegung des ersten Sitzelements insbesondere die Sitztiefe des Fahrzeugsitzes. Das Aufeinander-zu-Bewegen und das Voneinander-weg-Bewegen der Sitzelementpaare verändert insbesondere die Breite der Sitz- bzw. Rückenfläche.

Gemäß einer Weiterbildung der erfindungsgemäßen Vorrichtung weist diese eine berührungsempfindliche Oberfläche zum Betätigen der Schaltelemente auf. Des Weiteren kann die Vorrichtung eine Annäherungserfassungsvorrichtung umfassen, mit welcher die Annäherung eines Betätigungsobjekts an die berührungsempfindliche Oberfläche erfassbar ist.

Die berührungsempfindliche Oberfläche ist insbesondere auf der Anzeigefläche ausgebildet, so dass ein Touchscreen bereitgestellt wird. Auf diese Weise kann die Verstellung des ersten Sitzelements und gegebenenfalls der weiteren Sitzelemente über eine zentrale Bedieneinrichtung erfolgen, die auch für andere Funktionen des Fahrzeugs eingesetzt wird. Die Vorrichtung zum Verstellen des Sitzelements kann in das Bedienkonzept integriert werden. Gesonderte mechanische oder elektrische Schalter sind nicht erforderlich, so dass die Vorrichtung sehr kostengünstig und bauraumsparend in ein Fahrzeug integriert werden kann.

Die Erfindung wird nun anhand eines Ausführungsbeispiels mit Bezug zu den Zeichnungen erläutert.
Figur 1 zeigt schematisch den Aufbau eines Ausführungsbeispiels der erfindungsgemäßen Vorrichtung,
Figur 2 zeigt eine erste Anzeige auf der Anzeigefläche, die von einem Ausführungsbeispiel des erfindungsgemäßen Verfahrens erzeugt wird,
Figur 3 zeigt eine weitere Anzeige auf der Anzeigefläche, die von dem Ausführungsbeispiel des erfindungsgemäßen Verfahrens erzeugt wird,
Figur 4 zeigt eine noch weitere Anzeige auf der Anzeigefläche, die von dem Ausführungsbeispiel des erfindungsgemäßen Verfahrens erzeugt wird, und

die Figuren 5 bis 14 veranschaulichen Animationen, die von dem Ausführungsbeispiel des erfindungsgemäßen Verfahrens bei einer Veränderung der Auswahl von Sitzelementen erzeugt wird.

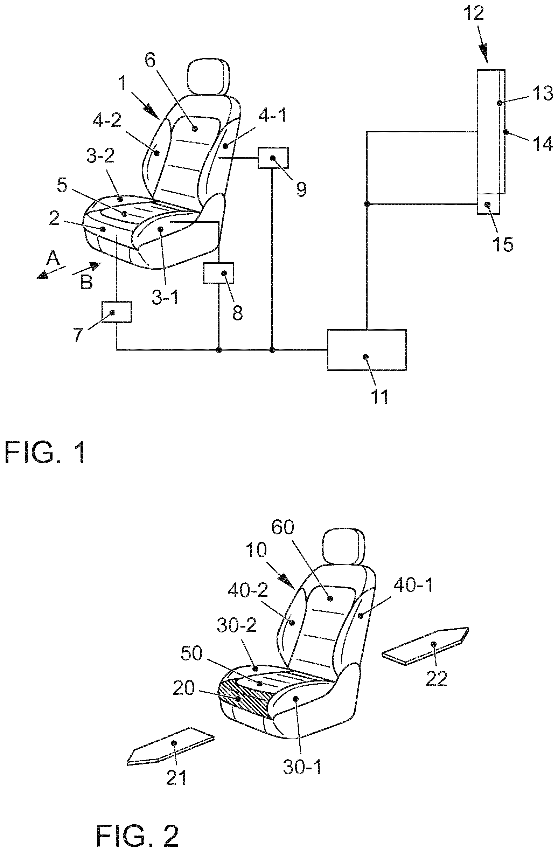

Zunächst wird mit Bezug zu Figur 1 der Aufbau des Ausführungsbeispiels der erfindungsgemäßen Vorrichtung erläutert:
In einem Fahrzeug ist ein Fahrzeugsitz 1 angeordnet, der als erstes Sitzelement ein Knieelement 2 aufweist. Des Weiteren umfasst der Fahrzeugsitz 1 Sitzflächenseitenwangen 3-1 und 3-2 sowie Rückenflächenseitenwangen 4-1 und 4-2. Zwischen den Sitzflächenseitenwangen 3-1, 3-2 befindet sich eine Sitzfläche 5, die nach vorne in das Knieelement 2 übergeht. Zwischen den Rückenflächenseitenwangen 4-1, 4-2 befindet sich eine Rückenfläche 6.

Das Knieelement 2 kann in Richtung der Pfeile A und B vor und zurück bewegt werden kann. Eine erste Verstelleinrichtung 7 umfasst hierfür insbesondere einen Motor und eine Motorsteuerung. Durch eine Bewegung des Knieelements 2 kann die Sitztiefe des Fahrzeugsitzes 1 vergrößert und verkleinert werden.

Die Sitzflächenseitenwangen 3-1 und 3-2 sind mit einer zweiten Verstelleinrichtung 8 gekoppelt, welche die Sitzflächenseitenwangen 3-1, 3-2 aufeinander zu und voneinander weg bewegen kann. Hierdurch kann die Sitzbreite verändert werden. Auch die zweite Verstelleinrichtung umfasst hierfür einen Motor und eine Motorsteuerung.

Schließlich sind auch die Rückenflächenseitenwangen 4-1 und 4-2 mit einer dritten Verstelleinrichtung 9 gekoppelt, welche auch einen Motor und eine Motorsteuerung umfasst und mittels welcher die Rückenflächenseitenwangen aufeinander zu und voneinander weg bewegt werden können. Auf diese Weise kann die Breite der Rückenfläche verändert werden.

Die Verstelleinrichtungen 7, 8, 9 sind mit einer Steuereinrichtung 11 gekoppelt, welche die Verstelleinrichtungen 7, 8, 9 so ansteuern kann, dass das Knieelement 2, die Sitzflächenseitenwangen 3-1, 3-2 und die Rückenflächenseitenwangen 4-1, 4-2 bewegt werden können. Die Sitzflächenseitenwangen 3-1, 3-2 stellen dabei ein Sitzelementpaar dar, welches nur gemeinsam bewegt werden kann. Gleichermaßen stellen die Rückenflächenseitenwangen 4-1, 4-2 ein weiteres Sitzelementpaar dar, welches nur gemeinsam verstellt werden kann.

Die Steuereinrichtung 11 ist des Weiteren mit einer Anzeigevorrichtung 12 datentechnisch gekoppelt. Die Steuervorrichtung 11 umfasst eine Anzeigefläche 13, auf welcher eine berührungsempfindliche Oberfläche 14 ausgebildet ist. Es wird somit ein so genannter Touchscreen bereitgestellt.

Bei der Anzeigevorrichtung 12 ist des Weiteren eine Annäherungserfassungseinrichtung 15 angeordnet. Mittels der Annäherungserfassungseinrichtung 15 kann die Annäherung eines Betätigungsobjekts an die berührungsempfindliche Oberfläche 14 erfasst werden. Bei dem Betätigungsobjekt kann es sich insbesondere um die Fingerspitze eines Nutzers handeln. Derartige Annäherungserfassungseinrichtungen 15 sind an sich bekannt. Die Annäherungserfassungseinrichtung 15 ist auch mit der Steuereinrichtung 11 datentechnisch gekoppelt. Sie überträgt ein Signal an die Steuereinrichtung 11, wenn erfasst wurde, dass sich ein Betätigungsobjekt innerhalb eines Detektionsbereichs vor der berührungsempfindlichen Oberfläche 14 befindet.

Berührt ein Nutzer mit einem Betätigungsobjekt die berührungsempfindliche Oberfläche 14 in einem bestimmten Bereich, wird ein entsprechendes Signal an die Steuereinrichtung 11 übertragen. In Verbindung mit der korrespondierenden Anzeige auf der Anzeigefläche 13 kann die Steuereinrichtung 11 auf diese Weise die Betätigung eines auf der Anzeigefläche 13 angezeigten Schaltelements erfassen. Wenn die Betätigung eines Schaltelements erfasst worden ist, kann die Steuereinrichtung 11 Steuersignale für die Verstelleinrichtungen 7, 8, 9 des Fahrzeugsitzes 1 erzeugen und die Sitzelemente 2, 3-1, 3-2, 4-1, 4-2 bewegen. Außerdem kann sie die Anzeige auf der Anzeigefläche 13 verändern.

Optional können die Verstelleinrichtungen 7, 8, 9 Bestätigungssignale für die Bewegung der Sitzelemente 2, 3-1, 3-2, 4-1, 4-2 zurück an die Steuereinrichtung 11 übertragen, so dass diese in Abhängigkeit von den Bestätigungssignalen Graphikelemente, insbesondere bewegte Graphikelemente, für die Anzeigefläche 13 erzeugen kann.

Von der Steuereinrichtung 11 werden verschiedene Anzeigen zur Anzeige auf der Anzeigefläche 13 erzeugt. Die Anzeige hängt dabei von der Auswahl eines Sitzelements 2 bzw. eines Sitzelementpaars 3-1, 3-2 bzw. 4-1, 4-2 ab. Die Anzeige umfasst dabei Graphikelemente sowie Schaltelemente für die Verstellung der verschiedenen Sitzelemente 2, 3-1, 3-2, 4-1, 4-2 des Fahrzeugsitzes 1.

Mit Bezug zu den Figuren 2 bis 4 werden verschiedene Grundanzeigen erläutert, welche mittels der Steuereinrichtung 11 erzeugbar sind und die von dem Ausführungsbeispiel des erfindungsgemäßen Verfahrens erzeugt werden:
Bei den Anzeigen wird ein Graphikelement 10 des zu verstellenden Fahrzeugsitzes 1 angezeigt. Dieses Graphikelement 10 umfasst Graphikelemente 50, 60 für die Sitzfläche 5 und die Rückenfläche 6. Des Weiteren umfasst das Graphikelement 10 ein Graphikelement 20 für das Knieelement 2, Graphikelemente 30-1, 30-2 für die Sitzflächenseitenwangen 3-1, 3-2 und Graphikelemente 40-1, 40-2 für die Rückenflächenseitenwangen 4-1, 4-2.

Wenn sich kein Betätigungsobjekt im Detektionsbereich der Annäherungserfassungseinrichtung 15 befindet, werden alle Graphikelemente als nicht betätigbare Anzeigeelemente dargestellt. Wenn jedoch von der Annäherungserfassungseinrichtung 15 erfasst worden ist, dass sich ein Betätigungsobjekt im Detektionsbereich befindet, werden die Anzeigeelemente in Schaltelemente umgewandelt, welche der Nutzer durch Berührung betätigen kann. Die Umwandlung von einem Anzeigeelement in ein Schaltelement wird dadurch visualisiert, dass das entsprechende Schaltelement heller dargestellt wird. Alternativ oder zusätzlich wird eine Umrisslinie um das entsprechende Schaltelement dargestellt. Wenn sich der Nutzer beispielsweise mit seiner Fingerspitze der berührungsempfindlichen Oberfläche 14 annähert, erfolgt somit beim Eintritt seiner Fingerspitze in den Detektionsbereich eine Konversion verschiedener Anzeigeelemente in Schaltelemente, so dass der Nutzer schnell erkennen kann, welche Betätigungsmöglichkeiten er hat. Durch Berühren eines der Graphikelemente 20, 30-1, 30-2, 40-1, 40-2 für eines der Sitzelemente 2, 3-1, 3-2, 4-1, 4-2 kann der Nutzer ein Sitzelement 2 bzw. ein Sitzelementpaar 3-1, 3-2 oder 4-1, 4-2 auswählen. Eine solche Auswahl wird über die berührungsempfindliche Oberfläche 14 erfasst. Die Steuereinrichtung 11 erzeugt daraufhin eine veränderte Darstellung für das Graphikelement des ausgewählten Sitzelements. Das entsprechende Graphikelement wird so dargestellt, als ob ein gelartiges farbiges Fluid das entsprechende Graphikelement ausfüllt.

In Figur 2 ist eine Anzeige gezeigt, die erzeugt wird, wenn das Knieelement 2 ausgewählt worden ist. Das Graphikelement 20 wird farbig als ausgewähltes Graphikelement dargestellt. Des Weiteren werden Schaltelemente für die Betätigung der Verstellung des Knieelements 2 angezeigt. Das erste Schaltelement ist ein graphisches Pfeilelement 21, welches bei der perspektivischen Darstellung 10 des Fahrzeugsitzes 1 nach vorne weist. Das zweite Schaltelement ist ein graphisches Pfeilelement 22, welches bei dieser perspektivischen Darstellung nach hinten weist.

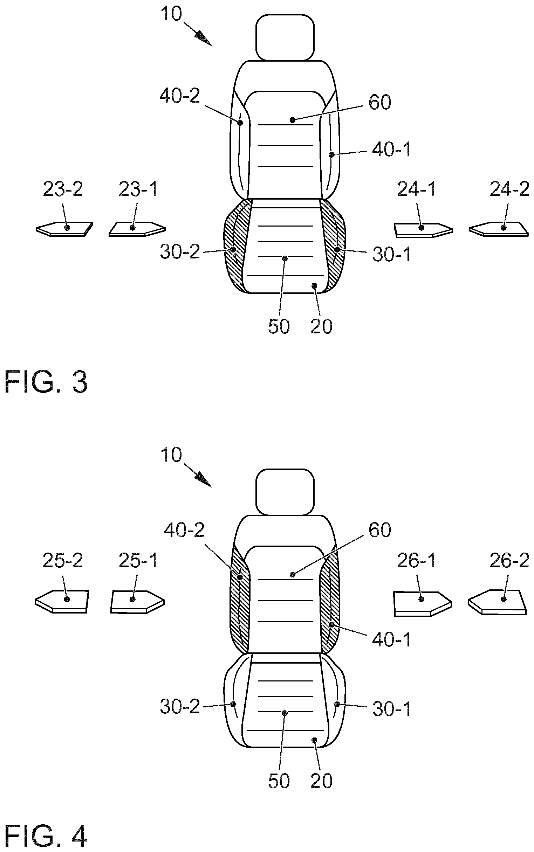

Figur 3 zeigt die Anzeige auf der Anzeigefläche 13, wenn die Sitzflächenseitenwangen 3-1, 3-2 ausgewählt worden sind. Die entsprechenden Graphikelemente 30-1, 30-2 werden in diesem Fall in Farbe mit dem gelartigen Fluid gefüllt dargestellt. Des Weiteren werden weitere Schaltelemente zum Betätigen der möglichen Bewegungen der Sitzflächenseitenwangen 3-1, 3-2 angezeigt. Bei einem dritten Schaltelement handelt es sich um zwei graphische Pfeilelemente 23-1 und 23-2, die voneinander weg weisen. Wenn der Nutzer dieses Schaltelement betätigt, wird von der Steuereinrichtung 11 ein Steuersignal erzeugt, welches die Sitzflächenseitenwangen 3-1 und 3-2 voneinander weg bewegt.

Des Weiteren wird ein viertes Schaltelement angezeigt, welches graphische Pfeilelemente 24-1 und 24-2 umfasst, welche aufeinander zu weisen. Wird dieses vierte Schaltelement betätigt, wird von der Steuereinrichtung 11 ein Steuersignal erzeugt, durch welches die Sitzflächenseitenwangen 3-1 und 3-2 aufeinander zu bewegt werden.

Schließlich zeigt Figur 4 die Anzeige, wenn die Rückenflächenseitenwangen 4-1, 4-2 ausgewählt sind. Die entsprechenden Graphikelemente 40-1 und 40-2 werden in diesem Fall farbig und mit dem gelartigen Fluid gefüllt dargestellt. Des Weiteren werden weitere Schaltelemente zum Betätigen der Verstellung der Rückenflächenseitenwangen 4-1, 4-2 angezeigt. Ein fünftes Schaltelement umfasst graphische Pfeilelemente 25-1 und 25-2, die voneinander weg weisen, und ein sechstes Schaltelement umfasst graphische Pfeilelemente 26-1 und 26-2, die aufeinander zu weisen. Bei der Betätigung des fünften Schaltelements wird von der Steuereinrichtung ein Steuersignal erzeugt, durch welches die Rückenflächenseitenwangen 4-1, 4-2 voneinander weg bewegt werden und bei Betätigung des sechsten Schaltelements wird von der Steuereinrichtung 11 ein Steuersignal erzeugt, durch welches die Rückenflächenseitenwangen 4-1 und 4-2 aufeinander zu bewegt werden.

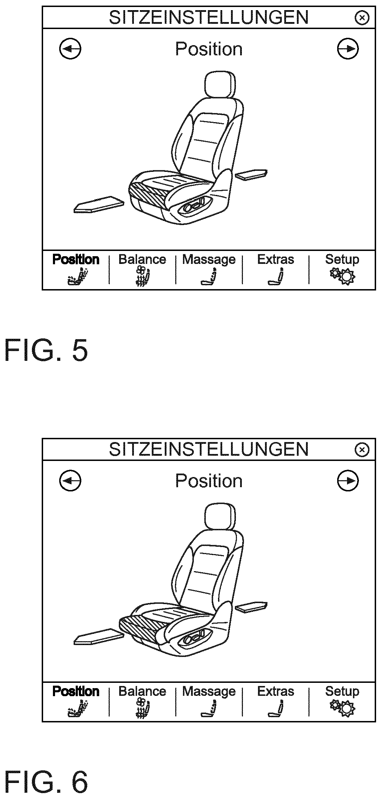

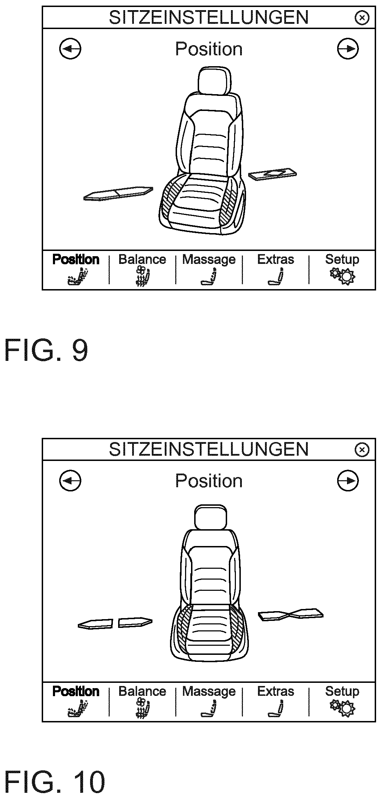

Im Folgenden wird ein Ausführungsbeispiel des erfindungsgemäßen Verfahrens mit Bezug zu den Figuren 5 bis 16 erläutert. In den Figuren 5 bis 14 werden Anzeigen wiedergegeben, wie sie bei der Ausführung des erfindungsgemäßen Verfahrens auf der Anzeigefläche 13 wiedergegeben werden.

In Figur 5 wird die Ausgangssituation dargestellt. Das Knieelement 2 ist ausgewählt, so dass das entsprechende Graphikelement 20 farbig dargestellt ist. Die übrigen Schaltelemente werden heller und nicht farbig mit einer Umrisslinie dargestellt. Des Weiteren werden die graphischen Pfeilelemente 21 und 22 angezeigt. Bei den graphischen Pfeilelementen 21 und 22 handelt es sich um Pfeilflächen, die in der Ebene des Graphikelements 50 für die Sitzfläche 5 dargestellt werden. Betätigt der Nutzer eine dieser Pfeilelemente 21 oder 22, wird von der Steuereinrichtung 11 ein Steuersignal erzeugt, durch welches das Knieelement 2 nach vorne oder nach hinten verschoben wird. Gleichzeitig mit dieser körperlichen Bewegung des Knieelements 2 wird auch das Graphikelement 20, welches dem Knieelement 2 zugeordnet ist, bewegt. Bei einem Ausführungsbeispiel wird das Graphikelement 20 so lange hin und her bewegt, so lange der Nutzer eines der Pfeilelemente 21 bzw. 22 berührt. In diesem Fall wird somit nur veranschaulicht, dass das Knieelement 2 bewegt wird. Die Bewegung des Graphikelements 20 erfolgt nicht synchron mit der tatsächlichen Bewegung des Knieelements 2.

Falls jedoch die erste Verstelleinrichtung 7 ein Bestätigungssignal für die Bewegung des Knieelements 2 zurück an die Steuereinrichtung 11 überträgt, synchronisiert die Steuereinrichtung 11 die angezeigte Bewegung des Graphikelements 20 mit der realen Bewegung des Knieelements 2.

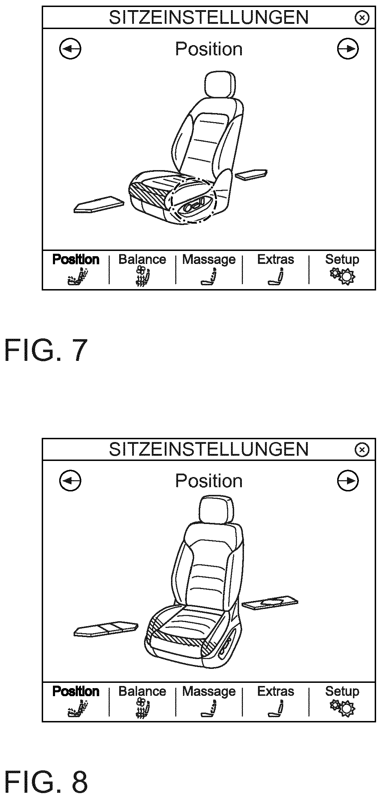

Die Bewegung des Graphikelements 20 ist in Figur 6 gezeigt, in der zu erkennen ist, dass das Graphikelement 20 nach vorne bewegt worden ist, so dass die Sitztiefe vergrößert wurde. In Figur 7 ist gezeigt, dass das Graphikelement 20 wieder zurückbewegt worden ist. Dies verdeutlicht die Hin- und Her-Bewegung des Graphikelements 20 gemäß dem hier beschriebenen Ausführungsbeispiel.

Wenn der Nutzer nun zum Verstellen der Sitzflächenseitenwangen 3-1, 3-2 das Graphikelement 30-1 oder das Graphikelement 30-2 berührt, verändert sich die Auswahl von dem Knieelement 2 zu den Sitzflächenseitenwangen 3-1, 3-2. Für den Übergang dieser Auswahl wird eine Animation auf der Anzeigefläche 13 wiedergegeben. Bei dieser Animation verändern sich die Hervorhebungen der Graphikelemente 20 sowie 30-1 und 30-2. Die Animation zeigt, dass das graphisch dargestellte gelartige farbige Fluid von dem Graphikelement 20 für das Knieelement 2 in die Graphikelemente 30-1 und 30-2 für die Sitzflächenseitenwangen 3-1 und 30-2 fließt. Am Ende der Animation werden die Graphikelemente 30-1 und 30-2 vollständig farbig dargestellt, als wären sie mit dem farbigen Fluid gefüllt.

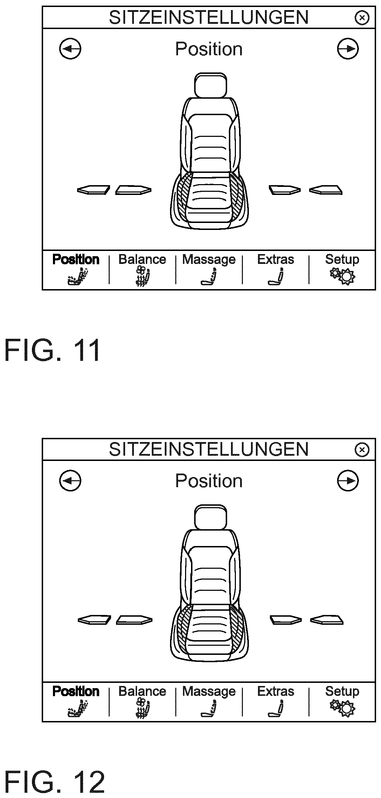

Des Weiteren verändern sich die graphischen Pfeilelemente 21 und 22. Dies ist in den Figuren 8 bis 11 gezeigt. Das Pfeilelement 21 geht in einen Doppelpfeil über, der sich anschließend trennt, bis schließlich wie in Figur 11 gezeigt die graphischen Pfeilelemente 23-1 und 23-2 angezeigt werden. Gleichzeitig dreht sich die perspektivische Darstellung des Graphikelements 10 für den Fahrzeugsitz 1 derart, dass am Ende der Animation das Graphikelement 10 den Fahrzeugsitz 1 von vorne zeigt. Beim Übergang des Pfeilelements 21 in die Pfeilelemente 23-1, 23-2 werden diese Pfeilelemente auch gedreht, so dass sie am Ende mit ihren Pfeilflächen in der Ebene des Graphikelements 50 für die Sitzfläche 5 dargestellt werden.

Entsprechend wird das graphische Pfeilelement 22 derart verändert, dass es in einen Balken übergeht, der sich schließlich trennt, bis die aufeinander weisenden Pfeilelemente 24-1 und 24-2 in der Ebene des Graphikelements 50 für die Sitzfläche 5 angezeigt wird.

Wenn in diesem Zustand das dritte Schaltelement mit den Pfeilelementen 23-1, 23-2 betätigt wird, wird von der Steuereinrichtung 11 ein Steuersignal erzeugt, durch welches die Sitzflächenseitenwangen 3-1, 3-2 auseinander bewegt werden. Gleichzeitig zu dieser realen Bewegung der Sitzflächenseitenwangen 3-1, 3-2 werden die entsprechenden Graphikelemente 30-1, 30-2 hin und her bewegt, wie dies beim Vergleich der Figuren 11 und 12 erkennbar ist. Gleichermaßen wird beim Betätigen des vierten Schaltelements mit den Pfeilelementen 24-1, 24-2 ein Steuersignal erzeugt, durch welches die Sitzflächenseitenwangen 3-1, 3-2 aufeinander zu bewegt werden. Auch in diesem Fall werden gleichzeitig die entsprechenden Graphikelemente 30-1, 30-2 hin und her bewegt. Die Hin- und Her-Bewegung erfolgt dabei jeweils derart, dass die von den Graphikelementen 30-1 und 30-2 dargestellten Sitzflächenseitenwangen aufeinander zu und voneinander weg bewegt werden. Auch in diesem Fall ist es bei einem Ausführungsbeispiel des erfindungsgemäßen Verfahrens möglich, dass die Bewegung der Graphikelemente 30-1 und 30-2 mit der realen Bewegung der Sitzflächenseitenwangen 3-1, 3-2 synchronisiert wird.

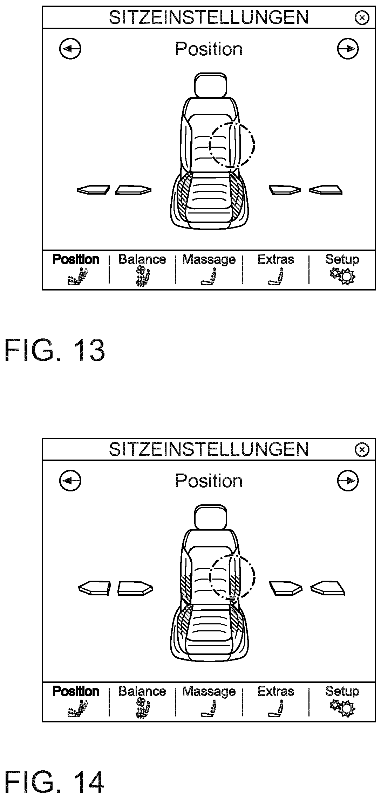

Wenn der Nutzer nun durch eine Berührung der Graphikelemente 40-1 oder 40-2 die Rückenflächenseitenwangen 4-1, 4-2 auswählt, wird erneut eine Animation erzeugt, bei welcher die Graphikelemente 30-1, 30-2 und 40-1, 40-2 so verändert werden, dass der Eindruck erweckt wird, dass das farbige gelartige Fluid von den Graphikelementen 30-1, 30-2 in die Graphikelemente 40-1, 40-2 fließt und diese schließlich ganz ausfüllt, so dass sie am Ende farbig dargestellt werden. Gleichermaßen werden die Pfeilelemente 23-1, 23-2, 24-1, 24-2 nach oben bewegt und hinsichtlich ihrer Flächenausrichtung gedreht, so dass sie am Ende in der Ebene des Graphikelements 60 für die Rückenfläche 6 angezeigt werden, wie dies in den Figuren 13 bis 15 gezeigt ist.

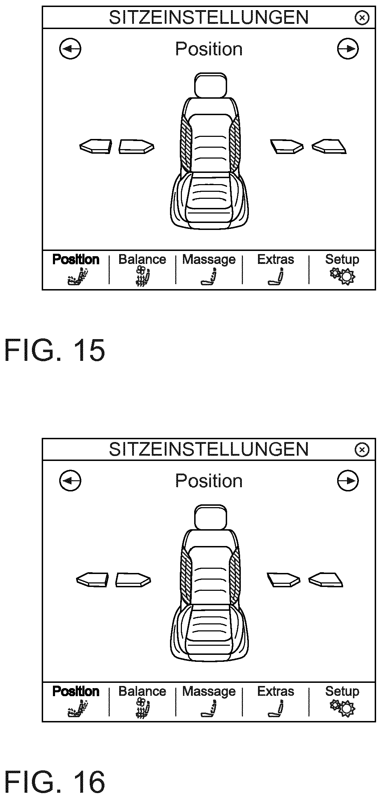

Bei einer Betätigung des fünften Schaltelements mit den Pfeilelemente 25-1, 25-2 wird ein Steuersignal erzeugt, durch welches die Rückenflächenseitenwangen 4-1 und 4-2 voneinander weg bewegt werden. Gleichzeitig werden die Graphikelemente 40-1, 40-2 aufeinander zu und voneinander weg hin und her bewegt, wie dies beim Vergleich der Figuren 15 und 16 ersichtlich ist. Wie vorstehend beschrieben kann alternativ die Bewegung der Graphikelemente 40-1 und 40-2 auch synchron mit der realen Bewegung der Rückenflächenseitenwangen 4-1 und 4-2 erfolgen.

Wird das sechste Schaltelement mit den Pfeildarstellungen 26-1, 26-2 betätigt, wird von der Steuereinrichtung 11 ein Steuersignal erzeugt, durch welches die Rückenflächenseitenwangen 4-1, 4-2 aufeinander zu bewegt werden. Entsprechend werden gleichzeitig die Graphikelemente 40-1 und 40-2 aufeinander zu und voneinander weg hin und her bewegt oder alternativ synchron mit der Bewegung der Rückenflächenseitenwangen 4-1, 4-2 bewegt.

### Bezugszeichenliste

- 1: Fahrzeugsitz
- 2: Knieelement
- 3-1, 3-2: Sitzflächenseitenwangen
- 4-1, 4-2: Rückenflächenseitenwangen
- 5: Sitzfläche
- 6: Rückenfläche
- 7: Verstelleinrichtung
- 8: Verstelleinrichtung
- 9: Verstelleinrichtung
- 10: Graphikelement
- 11: Steuervorrichtung
- 12: Anzeigevorrichtung
- 13: Anzeigefläche
- 14: berührungsempfindliche Oberfläche
- 15: Annäherungserfassungseinrichtung
- 20: Graphikelement
- 21: Pfeilelement
- 22: Pfeilelement
- 23-1, 23-2: Pfeilelement
- 24-1, 24-2: Pfeilelement
- 25-1, 25-2: Pfeilelement
- 26-1, 26-2: Pfeilelement
- 30-1, 30-2: Graphikelement
- 40-1, 40-2: Graphikelement
- 50: Graphikelement
- 60: Graphikelement

## Patentansprüche

1. Verfahren zum Verstellen zumindest eines bewegbaren ersten Sitzelements (2) eines Fahrzeugsitzes (1), bei dem
auf einer Anzeigefläche (13) ein Graphikelement (10) des zu verstellenden Fahrzeugsitzes (1) mit zumindest einem Graphikelement (20) des ersten Sitzelements (2) angezeigt wird,
zum Verstellen des ersten Sitzelements (2) ein erstes und ein zweites Schaltelement auf der Anzeigefläche (13) angezeigt werden, wobei das erste Schaltelement ein erstes und das zweite Schaltelement ein zweites graphisches Pfeilelement (21, 22) umfassen, welche entgegengesetzte Richtungen zum Bewegen des ersten Sitzelements (2) auszeichnen, und
beim Betätigen des ersten Schaltelements ein Steuersignal erzeugt wird, durch welches das erste Sitzelement (2) in einer ersten Richtung (A) bewegt wird,
**dadurch gekennzeichnet, dass**
durch das Steuersignal gleichzeitig das Graphikelement (20) des ersten Sitzelements (2) bewegt wird und
der zu verstellende Fahrzeugsitz (1) ein Sitzelementpaar aufweist, das ein zweites und ein drittes Sitzelement (3-1, 3-2) umfasst, die aufeinander zu und voneinander weg bewegbar sind,
bei dem Graphikelement (10) des zu verstellenden Fahrzeugsitzes (1) auf der Anzeigefläche (13) Graphikelemente (30-1, 30-2) für das zweite und dritte Sitzelement (3-1, 3-2) angezeigt werden,
zum Verstellen des Sitzelementpaars auf der Anzeigefläche (13) ein drittes Schaltelement, das ein drittes und ein viertes graphisches Pfeilelement (23-1, 23-2) umfasst, welche voneinander weg weisen, und ein viertes Schaltelement, das ein fünftes und ein sechstes Pfeilelement (24-1, 24-2) umfasst, welche aufeinander zu weisen, angezeigt werden, und
beim Betätigen des dritten Schaltelements ein Steuersignal erzeugt wird, durch welches das zweite und das dritte Sitzelement (3-1, 3-2) des Sitzelementpaars voneinander weg bewegt werden und gleichzeitig die Graphikelemente (30-1, 30-2) des zweiten und des dritten Sitzelements (3-1, 3-2) bewegt werden und beim Betätigen des vierten Schaltelements ein Steuersignal erzeugt wird, durch welches das zweite und das dritte Sitzelement (3-1, 3-2) des Sitzelementpaars aufeinander zu bewegt werden und gleichzeitig die Graphikelemente (30-1, 30-2) des zweiten und des dritten Sitzelements (3-1, 3-2) bewegt werden.

2. Verfahren nach Anspruch 1, **dadurch gekennzeichnet, dass**
der Fahrzeugsitz (1) ein weiteres Sitzelementpaar aufweist, das ein viertes und ein fünftes Sitzelement (4-1, 4-2) umfasst, die aufeinander zu und voneinander weg bewegbar sind,
bei dem Graphikelement (10) des zu verstellenden Fahrzeugsitzes (1) auf der Anzeigefläche (13) Graphikelemente (40-1, 40-2) für das vierte und fünfte Sitzelement (4-1, 4-2) angezeigt werden,
zum Verstellen des weiteren Sitzelementpaars auf der Anzeigefläche (13) ein fünftes Schaltelement, das ein siebtes und ein achtes graphisches Pfeilelement (25-1, 25-2) umfasst, welche voneinander weg weisen, und ein sechstes Schaltelement, das ein neuntes und ein zehntes Pfeilelement (26-1. 26-2) umfasst, welche aufeinander zu weisen, angezeigt werden,
beim Betätigen des fünften Schaltelements ein Steuersignal erzeugt wird, durch welches das vierte und das fünfte Sitzelement (4-1, 4-2) des weiteren Sitzelementpaars voneinander weg bewegt werden und gleichzeitig die Graphikelemente (40-1, 40-2) des vierten und des fünften Sitzelements (4-1, 4-2) bewegt werden und beim Betätigen des sechsten Schaltelements ein Steuersignal erzeugt wird, durch welches das vierte und das fünfte Sitzelement (4-1, 4-2) des weiteren Sitzelementpaars aufeinander zu bewegt werden und gleichzeitig die Graphikelemente (40-1, 40-2) des vierten und des fünften Sitzelements (4-1, 4-2) bewegt werden.

3. Verfahren nach einem der vorhergehenden Ansprüche, **dadurch gekennzeichnet, dass** die Bewegung der Graphikelemente (20, 30-1, 30-2, 40-1, 40-2) für eines der Sitzelemente (2, 3-1, 3-2, 4-1, 4-2) oder für die Sitzelemente (2, 3-1, 3-2, 4-1, 4-2) der Bewegung des jeweiligen Sitzelements (2, 3-1, 3-2, 4-1, 4-2) oder der jeweiligen Sitzelemente (2, 3-1, 3-2, 4-1, 4-2) entspricht.

4. Verfahren nach einem der vorhergehenden Ansprüche, **dadurch gekennzeichnet, dass** die Graphikelemente (20, 30-1, 30-2, 40-1, 40-2) der Sitzelemente (2, 3-1, 3-2, 4-1, 4-2) als Schaltelemente ausgebildet sind und dass durch eine Betätigung eines dieser Schaltelemente das jeweilige Sitzelement (2) oder das jeweilige Sitzelementpaar (3-1, 3-2, 4-1, 4-2) ausgewählt wird.

5. Verfahren nach einem der vorhergehenden Ansprüche, **dadurch gekennzeichnet, dass** eine Animation auf der Anzeigefläche (13) wiedergegeben wird, wenn ein Übergang von einer Auswahl des ersten Sitzelements (2) zu einer Auswahl des Sitzelementpaars mit dem zweiten und dritten Sitzelement (3-1, 3-2) erfolgt.

6. Verfahren nach Anspruch 5, **dadurch gekennzeichnet, dass** bei der Animation das erste graphische Pfeilelement (21) zunächst in einen Doppelpfeil übergeht, der sich dann in das dritte und vierte graphische Pfeilelement (23-1, 23-2) teilt und das zweite graphische Pfeilelement (22) zunächst in einen Balken übergeht, der sich dann in das dritte und vierte graphische Pfeilelement (24-1, 24-2) teilt.

7. Verfahren nach Anspruch 5 oder 6, **dadurch gekennzeichnet, dass** ein ausgewähltes Sitzelement (2, 3-1, 3-2, 4-1, 4-2) oder ausgewählte Sitzelemente (2, 3-1, 3-2, 4-1, 4-2) in dem Graphikelement (10) des Fahrzeugsitzes (1) durch eine Flächenfüllung hervorgehoben dargestellt werden und bei der Animation die Flächenfüllung zur Hervorhebung des Graphikelements (20) des ersten Sitzelements (2) verschwindet und die Flächenfüllung zur Hervorhebung der Graphikelemente (30-1, 30-2) des Sitzelementpaars erscheint, wobei das Verschwinden und das Erscheinen der Flächenfüllung wie der Fluss eines Fluids von dem Graphikelement (20) des ersten Sitzelements (2) zu den Graphikelementen (30-1, 30-2) des Sitzelementpaars dargestellt wird.

8. Verfahren nach einem der vorhergehenden Ansprüche, **dadurch gekennzeichnet, dass** eine Annährung eines Bedienobjekts an eine berührungsempfindliche Oberfläche (14) einer Eingabeeinrichtung erfasst wird und, wenn die Annäherung des Bedienobjekts an die berührungsempfindliche Oberfläche (14) erfasst wurde, betätigbare Schaltelemente hervorgehoben dargestellt werden.

9. Verfahren nach einem der vorhergehenden Ansprüche, **dadurch gekennzeichnet, dass** die Hin- und Her-Bewegung des ersten Sitzelements (2) die Sitztiefe des Fahrzeugsitzes (1) verändert.

10. Verfahren nach einem der Ansprüche 1 bis 9, **dadurch gekennzeichnet, dass** das zweite und das dritte Sitzelement (3-1, 3-2) des Sitzelementpaars Sitzflächenseitenwangen sind.

11. Verfahren nach einem der Ansprüche 2 bis 10, **dadurch gekennzeichnet, dass** das vierte und das fünfte Sitzelement (4-1, 4-2) des weiteren Sitzelementpaars Rückenflächenseitenwangen sind.

12. Vorrichtung zum Verstellen zumindest eines bewegbaren ersten Sitzelements (2) eines Fahrzeugsitzes (1) mit
einer ersten Verstelleinrichtung (7) zum Bewegen des ersten Sitzelements (2) und
einer Anzeigevorrichtung (12) mit einer Anzeigefläche (13) zur Anzeige eines Graphikelements (10) des zu verstellenden Fahrzeugsitzes (1) mit zumindest einem Graphikelement (20) des ersten Sitzelements (2), wobei zum Verstellen des ersten Sitzelements (2) ein erstes und ein zweites Schaltelement auf der Anzeigefläche (13) anzeigbar sind, wobei das erste Schaltelement ein erstes und das zweite Schaltelement ein zweites graphisches Pfeilelement (21, 22) umfassen, welche entgegengesetzte Richtungen zum Bewegen des Sitzelements (2) auszeichnen,
einer Steuereinrichtung (11), die mit der ersten Verstelleinrichtung (7) und der Anzeigevorrichtung (12) datentechnisch gekoppelt ist und die ausgebildet ist, beim Betätigen des ersten Schaltelements ein Steuersignal zu erzeugen, durch welches das erste Sitzelement (2) in einer ersten Richtung (A) bewegt wird,
**dadurch gekennzeichnet, dass**
die Steuereinrichtung (11) so ausgebildet ist, dass durch das beim Betätigen des ersten Schaltelements erzeugte Steuersignal gleichzeitig das Graphikelement (20) des ersten Sitzelements (2) bewegt wird,
der zu verstellende Fahrzeugsitz (1) ein Sitzelementpaar aufweist, das ein zweites und ein drittes Sitzelement (3-1, 3-2) umfasst, die aufeinander zu und voneinander weg bewegbar sind,
bei dem Graphikelement (10) des zu verstellenden Fahrzeugsitzes (1) auf der Anzeigefläche (13) Graphikelemente (30-1, 30-2) für das zweite und dritte Sitzelement (3-1, 3-2) anzeigbar sind,
zum Verstellen des Sitzelementpaars auf der Anzeigefläche (13) ein drittes Schaltelement, das ein drittes und ein viertes graphisches Pfeilelement (23-1, 23-2) umfasst, welche voneinander weg weisen, und ein viertes Schaltelement, das ein fünftes und ein sechstes Pfeilelement (24-1, 24-2) umfasst, welche aufeinander zu weisen, anzeigbar sind, und
die Steuereinrichtung (11) ausgebildet ist, beim Betätigen des dritten Schaltelements ein Steuersignal zu erzeugen, durch welches das zweite und das dritte Sitzelement (3-1, 3-2) des Sitzelementpaars voneinander weg bewegt werden und gleichzeitig die Graphikelemente (30-1, 30-2) des zweiten und des dritten Sitzelements (3-1, 3-2) bewegt werden, und beim Betätigen des vierten Schaltelements ein Steuersignal zu erzeugen, durch welches das zweite und das dritte Sitzelement (3-1, 3-2) des Sitzelementpaars aufeinander zu bewegt werden und gleichzeitig die Graphikelemente (30-1, 30-2) des zweiten und des dritten Sitzelements (3-1, 3-2) bewegt werden.

13. Vorrichtung nach Anspruch 12, **dadurch gekennzeichnet, dass** die Vorrichtung eine berührungsempfindliche Oberfläche (14) zum Betätigen der Schaltelemente umfasst.

14. Vorrichtung nach Anspruch 13, **dadurch gekennzeichnet, dass** die Vorrichtung eine Annäherungserfassungsvorrichtung (15) umfasst, mit welcher die Annäherung eines Betätigungsobjekts an die berührungsempfindliche Oberfläche (14) erfassbar ist.

## Claims

1. Method for adjusting at least one movable first seat element (2) of a vehicle seat (1), in which
a graphic element (10) of the vehicle seat (1) to be adjusted is displayed on a display surface (13) with at least one graphic element (20) of the first seat element (2),
in order to adjust the first seat element (2) a first and a second switching element is displayed on the display surface (13), wherein the first switching element comprises a first graphic arrow element (21), and the second switching element comprises a second graphic arrow element (22), which graphic arrow elements (21, 22) denote opposite directions for the movement of the first seat element (2), and
when the first switching element is activated a control signal is generated by which the first seat element (2) is moved in a first direction (A), **characterized in that**
the graphic element (20) of the first seat element (2) is moved simultaneously by the control signal, and
the vehicle seat (1) which is to be adjusted has a pair of seat elements which comprises a second and a third seat element (3-1, 3-2) which can be moved towards and away from one another,
in the case of the graphic element (10) of the vehicle seat (1) which is to be adjusted, graphic elements (30-1, 30-2) for the second and third seat elements (3-1, 3-2) are displayed on the display surface (13),
in order to adjust the pair of seat elements, a third switching element, which comprises a third and a fourth graphic arrow element (23-1, 23-2) which point away from one another, and a fourth switching element, which comprises a fifth and a sixth arrow element (24-1, 24-2) which point towards one another are displayed on the display surface (13), and
when the third switching element is activated a control signal is generated by which the second and the third seat elements (3-1, 3-2) of the pair of seat elements are moved away from one another and at the same time the graphic elements (30-1, 30-2) of the second and third seat elements (3-1, 3-2) are moved, and when the fourth switching element is activated a control signal is generated by which the second and the third seat elements (3-1, 3-2) of the pair of seat elements are moved towards one another and at the same time the graphic elements (30-1, 30-2) of the second and third seat elements (3-1, 3-2) are moved.

2. Method according to Claim 1, **characterized in that**
the vehicle seat (1) has a further pair of seat elements which comprises a fourth and a fifth seat element (4-1, 4-2) which can be moved towards one another and away from one another,
in the case of the graphic element (10) of the vehicle seat (1) which is to be adjusted, graphic elements (40-1, 40-2) for the fourth and fifth seat elements (4-1, 4-2) are displayed on the display surface (13),
in order to adjust the further pair of seat elements on the display surface (13) a fifth switching element, which comprises a seventh and an eighth graphic arrow element (25-1, 25-2) which point away from one another, and a sixth switching element, which comprises a ninth and a tenth arrow element (26-1, 26-2) which point towards one another, are displayed,
when the fifth switching element is activated, a control signal is generated by which the fourth and fifth seat elements (4-1, 4-2) of the further pair of seat elements are moved away from one another and at the same time the graphic elements (40-1, 40-2) of the fourth and fifth seat elements (4-1, 4-2) are moved, and when the sixth switching element is activated a control signal is generated by which the fourth and the fifth seat elements (4-1, 4-2) of the further pair of seat elements are moved towards one another and at the same time the graphic elements (40-1, 40-2) of the fourth and fifth seat elements (4-1, 4-2) are moved.

3. Method according to one of the preceding claims, **characterized in that** the movement of the graphic elements (20, 30-1, 30-2, 40-1, 40-2) for one of the seat elements (2, 3-1, 3-2, 4-1, 4-2) or for the seat elements (2, 3-1, 3-2, 4-1, 4-2) corresponds to the movement of the respective seat element (2, 3-1, 3-2, 4-1, 4-2) or of the respective seat elements (2, 3-1, 3-2, 4-1, 4-2).

4. Method according to one of the preceding claims, **characterized in that** the graphic elements (20, 30-1, 30-2, 40-1, 40-2) of the seat elements (2, 3-1, 3-2, 4-1, 4-2) are embodied as switching elements, and **in that** the respective seat element (2) or the respective pair of seat elements (3-1, 3-2, 4-1, 4-2) is selected by activation of one of these switching elements.

5. Method according to one of the preceding claims, **characterized in that** an animation is represented on the display surface (13) if a transition from a selection of the first seat element (2) to a selection of the pair of seat elements is carried out with the second and third seat elements (3-1, 3-2) .

6. Method according to Claim 5, **characterized in that** during the animation the first graphic arrow element (21) firstly merges with a double arrow which then divides into the third and fourth graphic arrow elements (23-1, 23-2), and the second graphic arrow element (22) firstly merges with a bar which then divides into the third and fourth graphic arrow elements (24-1, 24-2).

7. Method according to Claim 5 or 6, **characterized in that** a selected seat element (2, 3-1, 3-2, 4-1, 4-2) or selected seat elements (2, 3-1, 3-2, 4-1, 4-2) are displayed highlighted in the graphic element (10) of the vehicle seat (1) by filling in the area, and in the case of the animation the filling of the area for the highlighting of the graphic element (20) of the first seat element (2) disappears, and the filling in of the area for highlighting the graphic elements (30-1, 30-2) of the pair of seat elements appears, wherein the disappearance and the appearance of the filling in of the area is displayed like the flowing of a fluid from the graphic element (20) of the first seat element (2) to the graphic elements (30-1, 30-2) of the pair of seat elements.

8. Method according to one of the preceding claims, **characterized in that** an approach of an operator control object to a touch-sensitive interface (14) of an input device is sensed, and if the approach of the operator control object to the touch-sensitive interface (14) has been sensed, switching elements which can be activated are displayed in a highlighted fashion.

9. Method according to one of the preceding claims, **characterized in that** the to and fro movement of the first seat element (2) changes the sitting depth of the vehicle seat (1).

10. Method according to one of Claims 1 to 9, **characterized in that** the second and the third seat elements (3-1, 3-2) of the pair of seat elements are seat surface side elements.

11. Method according to one of Claims 2 to 12, **characterized in that** the fourth and the fifth seat elements (4-1, 4-2) of the further pair of seat elements are rear surface side elements.

12. Device for adjusting at least one movable first seat element (2) of a vehicle seat (1), having
a first adjusting device (7) for moving the first seat element (2)
and
a display device (12) with a display surface (13) for displaying a graphic element (10) of the vehicle seat (1) which is to be adjusted, with at least one graphic element (20) of the first seat element (2), wherein in order to adjust the first seat element (2) a first and a second switching element can be displayed on the display surface (13), wherein the first switching element comprises a first graphic arrow element (21), and the second switching element comprises a second graphic arrow element (22), which graphic arrow elements (21, 22) denote opposite directions for the movement of the seat element (2),
a control apparatus (11) which is coupled in terms of data technology to the first adjustment apparatus (7) and the display device (12) and which is designed to generate, when the first switching element is activated, a control signal by which the first seat element (2) is moved in a first direction (A),
**characterized in that**
the control apparatus (11) is embodied in such a way that the control signal which is generated when the first switching element is activated at the same time causes the graphic element (20) of the first seat element (2) to be moved,
the vehicle seat (1) which is to be adjusted has a pair of seat elements which comprises a second and a third seat element (3-1, 3-2) which can be moved towards one another and away from one another,
in the case of the graphic element (10) of the vehicle seat (1) which is to be adjusted, graphic elements (30-1, 30-2) for the second and third seat elements (3-1, 3-2) can be displayed on the display surface (13),
in order to adjust the pair of seat elements, a third switching element, which comprises a third and a fourth graphic arrow element (23-1, 23-2) which point away from one another, and a fourth switching element, which comprises a fifth and a sixth arrow element (24-1, 24-2) which point towards one another, can be displayed on the display surface (13), and
the control apparatus (11) is designed to generate, when the third switching element is activated, a control signal by which the second and the third seat elements (3-1, 3-2) of the pair of seat elements are moved away from one another and at the same time the graphic elements (30-1, 30-2) of the second and the third seat elements (3-1, 3-2) are moved and to generate, when the fourth switching element is activated, a control signal by which the second and the third seat elements (3-1, 3-2) of the pair of seat elements are moved towards one another and at the same time the graphic elements (30-1, 30-2) of the second and third seat elements (3-1, 3-2) are moved.

13. Device according to Claim 12, **characterized in that** the device comprises a touch-sensitive interface (14) for activating the switching elements.

14. Device according to Claim 13, **characterized in that** the device comprises a proximity-sensing device (15) with which the approaching of an activation object to the touch-sensitive surface (14) can be sensed.

## Revendications

1. Procédé de réglage d'au moins un premier élément de siège mobile (2) d'un siège de véhicule (1), procédé dans lequel
un élément graphique (10) du siège de véhicule (1) à régler est affiché avec au moins un élément graphique (20) du premier élément de siège (2) sur une surface d'affichage (13),
pour régler le premier élément de siège (2), un premier et un deuxième éléments de commutation sont affichés sur la surface d'affichage (13), le premier élément de commutation et le deuxième élément de commutation comprenant respectivement un premier et un deuxième éléments de flèche graphique (21, 22) qui représentent des directions opposées de déplacement du premier élément de siège (2), et
lors de l'actionnement du premier élément de commutation, un signal de commande est généré par lequel le premier élément de siège (2) est déplacé dans une première direction (A),
**caractérisé en ce que**
l'élément graphique (20) du premier élément de siège (2) est déplacé en même temps par le signal de commande, et
le siège de véhicule (1) à régler comprend une paire d'éléments de siège comprenant un deuxième et un troisième éléments de siège (3-1, 3-2) qui peuvent être rapprochés et éloignés l'un de l'autre,
dans l'élément graphique (10) du siège de véhicule (1) à régler, des éléments graphiques (30-1, 30-2) relatifs aux deuxième et troisième éléments de siège (3-1, 3-2) sont affichés sur la surface d'affichage (13),
pour régler la paire d'éléments de siège sur la surface d'affichage (13), un troisième élément de commutation comprenant un troisième et un quatrième éléments de flèche graphique (23-1, 23-2) qui pointent à l'opposé l'un à l'autre, et un quatrième élément de commutation comprenant un cinquième et un sixième éléments de flèche (24-1, 24-2) qui pointent l'un vers l'autre, sont affichés et
lors de l'actionnement du troisième éléments de commutation, un signal de commande est généré par lequel le deuxième et le troisième éléments de siège (3-1, 3-2) de la paire d'éléments de siège sont éloignés l'un de l'autre et en même temps les éléments graphiques (30-1, 30-2) du deuxième et du troisième éléments de siège (3-1, 3-2) sont déplacés et, lors de l'actionnement du quatrième élément de commutation, un signal de commande est généré par lequel le deuxième et le troisième éléments de siège (3-1, 3-2) de la paire d'éléments de siège sont rapprochés l'un de l'autre et en même temps les éléments graphiques (30-1, 30-2) du deuxième et du troisième éléments de siège (3-1, 3-2) sont déplacés.

2. Procédé selon la revendication 1, **caractérisé en ce que**
le siège de véhicule (1) comporte une autre paire d'éléments de siège comprenant un quatrième et un cinquième éléments de siège (4-1, 4-2) qui peuvent être rapprochés et éloignés l'un de l'autre,
dans l'élément graphique (10) du siège de véhicule (1) à régler, des éléments graphiques (40-1, 40-2) relatifs au quatrième et au cinquième éléments de siège (4-1, 4-2) sont affichés sur la surface d'affichage (13),
pour régler la paire supplémentaire d'éléments de siège, un cinquième élément de commutation comprenant un septième et un huitième éléments de flèche graphique (25-1, 25-2) qui pointent à l'opposé l'un de l'autre et un sixième élément de commutation comprenant un neuvième et un dixième éléments de flèche (26-1, 26-2) qui pointent l'un vers l'autre, sont affichés sur la surface d'affichage (13),
lors de l'actionnement du cinquième élément de commutation, un signal de commande est généré par lequel le quatrième et le cinquième élément de siège (4-1, 4-2) de l'autre paire d'éléments de siège sont éloignés l'un de l'autre et en même temps les éléments graphiques (40-1, 40-2) du quatrième et du cinquième éléments de siège (4-1, 4-2) sont déplacés et, lors de l'actionnement du sixième élément de commutation, un signal de commande est généré par lequel le quatrième et le cinquième éléments de siège (4-1, 4-2) de l'autre paire d'éléments de siège sont rapprochés l'un de l'autre et en même temps les éléments graphiques (40-1, 40-2) du quatrième et du cinquième éléments de siège (4-1, 4-2) sont déplacés.

3. Procédé selon l'une des revendications précédentes, **caractérisé en ce que** le déplacement des éléments graphiques (20, 30-1, 30-2, 40-1, 40-2) relatifs à l'un des éléments de siège (2, 3-1, 3-2 , 4-1, 4-2) ou aux éléments de siège (2, 3-1, 3-2, 4-1, 4-2) correspond au déplacement de l'élément de siège respectif (2, 3-1, 3-2, 4-1, 4-2) ou aux éléments de siège respectifs (2, 3-1, 3-2, 4-1,4-2).

4. Procédé selon l'une des revendications précédentes, **caractérisé en ce que** les éléments graphiques (20, 30-1, 30-2, 40-1, 40-2) des éléments de siège (2, 3-1, 3-2, 4-1, 4-2) sont conçus en tant qu'éléments de commutation et **en ce que** l'élément de siège respectif (2) ou la paire d'éléments de siège respectifs (3-1, 3-2, 4-1, 4-2) est sélectionné par actionnement de l'un de ces éléments de commutation.

5. Procédé selon l'une des revendications précédentes, **caractérisé en ce qu'**une animation est affichée sur la surface d'affichage (13) lorsqu'un passage d'une sélection du premier élément de siège (2) à une sélection de la paire d'éléments de siège est effectué avec le deuxième et le troisième éléments de siège (3-1, 3-2).

6. Procédé selon la revendication 5, **caractérisé en ce que** lors de l'animation, le premier élément de flèche graphique (21) se transforme tout d'abord en une double flèche qui se divise ensuite en le troisième et le quatrième éléments de flèche graphique (23-1, 23-2) et l'élément de flèche graphique (22) se transforme tout d'abord en une barre qui se divise ensuite en le troisième et le quatrième éléments de flèche graphique (24-1, 24-2).

7. Procédé selon la revendication 5 ou 6, **caractérisé en ce qu'**un élément de siège sélectionné (2, 3-1, 3-2, 4-1, 4-2) ou des éléments de siège sélectionnés (2, 3-1, 3-2, 4-1, 4-2) sont mis en évidence dans l'élément graphique (10) du siège du véhicule (1) par un remplissage de surface et, lors de l'animation, le remplissage de surface disparaît pour mettre en évidence l'élément graphique (20) du premier élément de siège (2) et le remplissage de surface apparaît pour mettre en évidence les éléments graphiques (30-1, 30-2) de la paire d'éléments de siège, la disparition et l'apparition du remplissage de surface étant représentées par l'écoulement d'un fluide de l'élément graphique (20) du premier élément de siège (2) vers les éléments graphiques (30-1, 30-2) de la paire d'éléments de siège.

8. Procédé selon l'une des revendications précédentes, **caractérisé en ce qu'**une approche d'un objet de commande d'une surface tactile (14) d'un dispositif de saisie est détectée et, lorsque l'approche de l'objet de travail d'une surface tactile (14) a été détectée, des éléments de commutation pouvant être actionnés sont mis en évidence.

9. Procédé selon l'une des revendications précédentes, **caractérisé en ce que** le mouvement de va-et-vient du premier élément de siège (2) modifie la profondeur d'assise du siège de véhicule (1).

10. Procédé selon l'une des revendications 1 à 9, **caractérisé en ce que** le deuxième et le troisième éléments de siège (3-1, 3-2) de la paire d'éléments de siège sont des joues latérales de surface de siège.

11. Procédé selon l'une des revendications 2 à 10, **caractérisé en ce que** le quatrième et le cinquième éléments de siège (4-1, 4-2) de l'autre paire d'éléments de siège sont des joues latérales de surface de dossier.

12. Dispositif de réglage d'au moins un premier élément de siège mobile (2) d'un siège de véhicule (1), comprenant
un premier dispositif de réglage (7) destiné à déplacer le premier élément de siège (2) et
un dispositif d'affichage (12) comprenant une surface d'affichage (13) destinée à afficher un élément graphique (10) du siège de véhicule (1) à régler comportant au moins un élément graphique (20) du premier élément de siège (2),
pour régler le premier élément de siège (2) un premier et un deuxième éléments de commutation pouvant être affiché sur la surface d'affichage (13), le premier éléments de commutation et le deuxième élément de commutation comprenant respectivement un premier et un deuxième éléments de flèche graphique (21, 22) qui représentent des directions opposées de déplacement de l'élément de siège (2),
un dispositif de commande (11) accouplé par une technologie de données au premier dispositif de réglage (7) et au dispositif d'affichage (12) et conçu pour générer lors de l'actionnement du premier élément de commutation un signal de commande par lequel le premier élément de siège (2) est déplacé dans une première direction (A),
**caractérisé en ce que**
le dispositif de commande (11) est conçu de telle sorte que l'élément graphique (20) du premier élément de siège (2) soit déplacé en même temps par le signal de commande généré lorsque le premier élément de commutation est actionné,
le siège de véhicule (1) à régler comprend une paire d'éléments de siège comprenant un deuxième et un troisième éléments de siège (3-1, 3-2) qui peuvent être rapprochés et éloignés l'un de l'autre,
dans l'élément graphique (10) du siège du véhicule à régler (1) des éléments graphiques (30-1, 30-2) relatifs aux deuxième et troisième éléments de siège (3-1, 3-2) sont affichés sur la surface d'affichage (13),
pour régler la paire d'éléments de siège un troisième élément de commutation, comprenant un troisième et un quatrième éléments de flèche graphique (23-1, 23-2) qui pointent à l'opposé l'un à l'autre, et un quatrième élément de commutation, comprenant un cinquième et un sixième éléments de flèche (24-1, 24-2) qui pointent l'un vers l'autre, peuvent être affichés sur la surface d'affichage (13) et
le dispositif de commande (11) est conçu pour générer, lors de l'actionnement du troisième élément de commutation, un signal de commande par lequel le deuxième et le troisième éléments de siège (3-1, 3-2) de la paire d'éléments de siège sont éloignés l'un de l'autre et en même temps les éléments graphiques (30-1, 30-2) du deuxième et du troisième éléments de siège (3-1, 3-2) sont déplacés et pour générer, lors de l'actionnement du quatrième élément de commutation, un signal de commande par lequel le deuxième et le troisième éléments de siège (3-1, 3-2) de la paire d'éléments de siège sont rapprochés l'un de l'autre et en même temps les éléments graphiques (30-1, 30-2) du deuxième et du troisième éléments de siège (3-1, 3-2) sont déplacés.

13. Dispositif selon la revendication 12, **caractérisé en ce que** le dispositif comporte une surface tactile (14) destinée à actionner les éléments de commutation.

14. Dispositif selon la revendication 13, **caractérisé en ce que** le dispositif comprend un dispositif de détection d'approche (15) au moyen duquel l'approche d'un objet d'actionnement de la surface tactile (14) peut être détectée.
